Europäisches Patentamt

(19) European Patent Office

Office européen des brevets

(11) Publication number: **0 099 657**
**A1**

(12) # EUROPEAN PATENT APPLICATION

(21) Application number: **83303624.7**

(51) Int. Cl.³: **A 01 K 31/00**

(22) Date of filing: **23.06.83**

(30) Priority: **29.06.82 GB 8218784**
**17.11.82 GB 8232823**

(43) Date of publication of application:
**01.02.84 Bulletin 84/5**

(84) Designated Contracting States:
**BE DE FR IT NL SE**

(71) Applicant: **Stanton, Michael Alfred John**
**4 Bainden Close Town Row**
**Rotherfield Crowborough Sussex TN6 3LG(GB)**

(72) Inventor: **Stanton, Michael Alfred John**
**4 Bainden Close Town Row**
**Rotherfield Crowborough Sussex TN6 3LG(GB)**

(74) Representative: **Sanders, Peter Colin**
**Christopher et al,**
**BROOKES & MARTIN High Holborn House 52/54 High**
**Holborn**
**London WC1V 6SE(GB)**

(54) Bird feeders.

(57) A wild bird feeder consists of a hollow transparent globe (10) having an entrance opening (11). The globe (10) is suspended by a swivel mechanism (24) so that it is freely rotatable about a substantially vertical axis. A vane (12) is responsive to the force of the prevailing wind so that the entrance (11) always faces downwind.

Fig. 1.

0099657

- 1 -

"BIRD FEEDERS"

This invention relates to a bird-feeder for use by wild birds.

Existing feeders suffer from several disadvantages. In particular both the food and the birds are generally exposed to the weather. Previous attempts to provide some form of shelter have not been entirely successful. For example one known feeder includes a cone-shaped roof sheltering a flat, annular feeding tray, the tray having separate compartments for food and water. Such a shelter is effective only in exceptionally calm conditions. In another arrangement the lower portion of a hollow transparent globe has a pair of openings through which birds can peck at food resting on the bottom of the globe, the top of the globe being provided with a hook or ring so that it can be hung from the branch of a tree. This provides better protection but still allows rain to penetrate when driven by a strong wind, particularly if the openings are made relatively large. On the other hand, if the openings are relatively small, it becomes less comfortable and more difficult for birds to use. It also cannot provide both food and water at the same time.

In accordance with the present invention I provide a wild bird feeder comprising a hollow container having an entrance opening for the passage of birds into and out of the container, means for suspending the container in such a manner that it is freely rotatable about a substantially vertical axis, and means responsive to the force of the prevailing wind for turning the container about its axis such that the entrance faces downwind.

The container is preferably a transparent globe, the diameter or maximum width of the entrance opening being at least one third of the diameter of the globe. The lower portion of the globe is preferably oblate and includes at least one partition providing two or more separate compartments for retaining food and/or water. In one particular embodiment the turning means comprises a vane extending outwardly from the periphery of the globe. The partition and the vane may form a unitary structure or may be separate components. Each may also act as a perch for birds, within and outside the globe respectively.

By way of example only, in the accompanying drawings:-

Fig. 1 is a perspective view of a wild bird feeder embodying the invention,

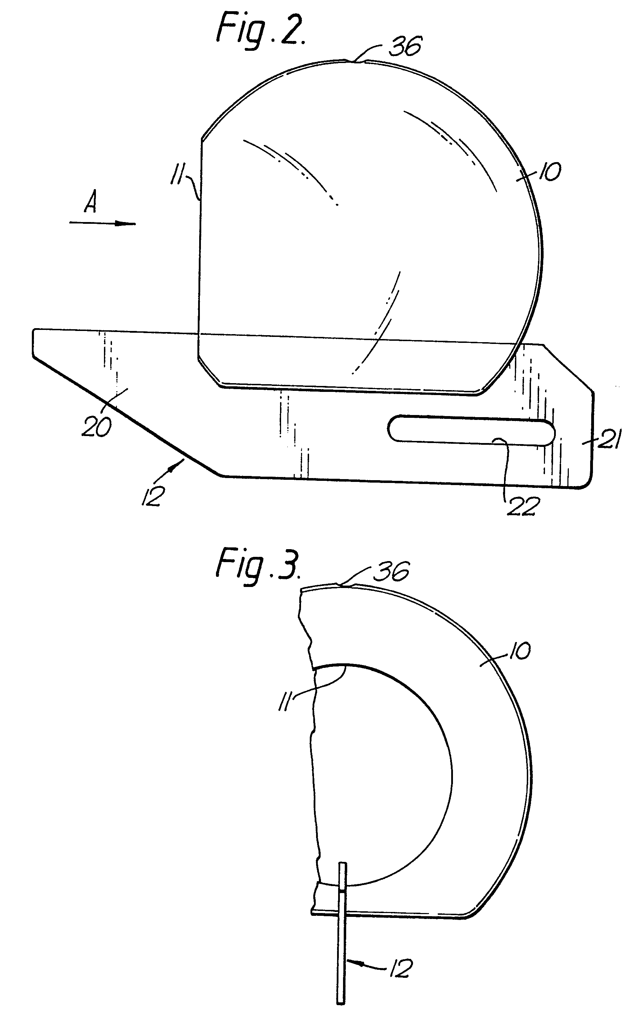

Fig. 2 is a side view of the feeder;

Fig. 3 is a half view on arrow A of Fig, 2, and,

Fig. 4 illustrates the separate components of the swivel mechanism on which the feeder is mounted, and in which Fig. 4a illustrates the swivel pin, Fig. 4b is a section through the bearing, Fig. 4c is a section through the pivot bracket, Fig. 4d is a front view of the pivot bracket and Fig. 4e is an end view of the pivot bracket.

The illustrated feeder consists of a globe 10 made from a tough transparent material such as "Oroglas", and having a large entrance opening 11. In one particular example, the opening 11 had a diameter of 13 cms. while the diameter of the globe was around 24 cms. The top of the globe is fitted with a swivel mechanism 24 so that it can rotate freely about a vertical axis when suspended above ground level.

The lower portion of the globe is oblate and is bisected by a vane 12 into two separate compartments, one compartment being used for food and the other for water. The vane 12 projects beneath the globe and includes a forward tapered portion 20 which acts as a rudder or lever when acted upon by the prevailing wind. The rear portion 21 of the vane includes a cut-out aperture 22 which reduces the surface area at the rear and thus enhances the rudder or lever action by reducing the pressure at the rear of the vane relative to that at the front. The globe is thus turned until the tapered portion 20 of the vane points downwind. Since the tapered portion 20 lies beneath the entrance 11, the entrance will always face downwind.

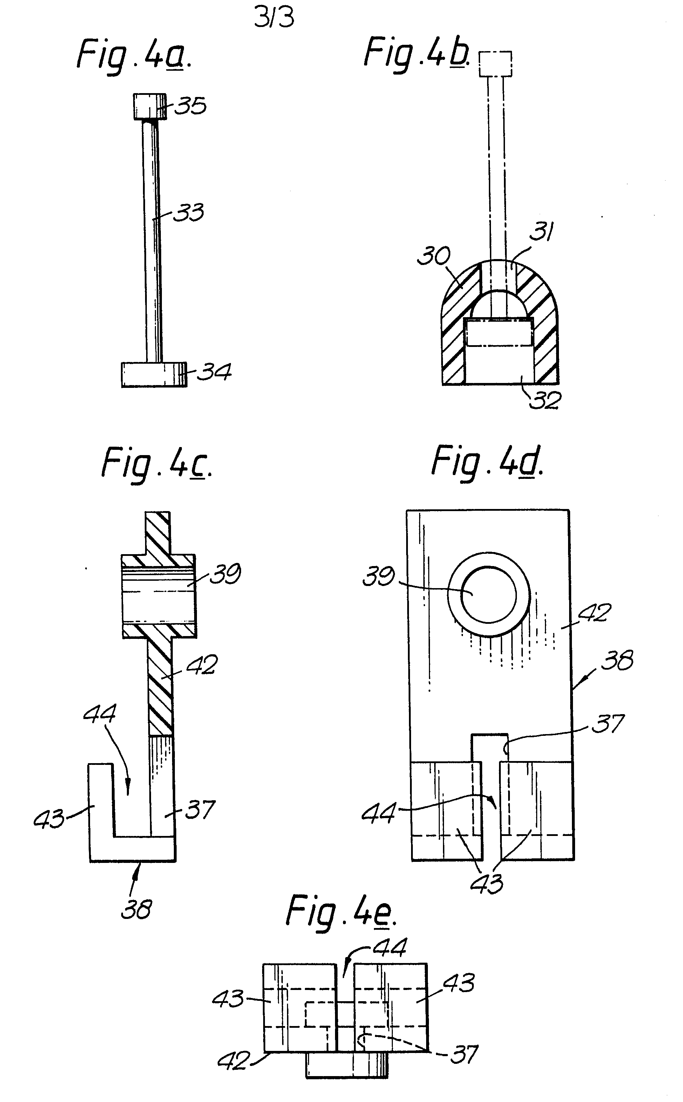

The swivel mechanism 24 is shown in more detail in Fig. 4. It consists essentially of a dome-shaped bearing 30 (Fig. 4b) having a central bore 31 and a counter bore 32. A cylindrical head 34 at one end of a swivel pin 33 (Fig. 4a) is seated in the counter bore 32, while a smaller head at the opposite end of the swivel pin passes through an opening 36 at the apex of the globe 10 and is releasably retained in a recess 44 of a pivot bracket 38 (Fig. 4c).

The bracket 38 consists of a rectangular plate 42 having a slot 37. Two retaining blocks 43 project from the front face of the plate 42, the blocks overlapping the opposed edges of the slot 37 and having their rear faces cut away to provide the recess 44.

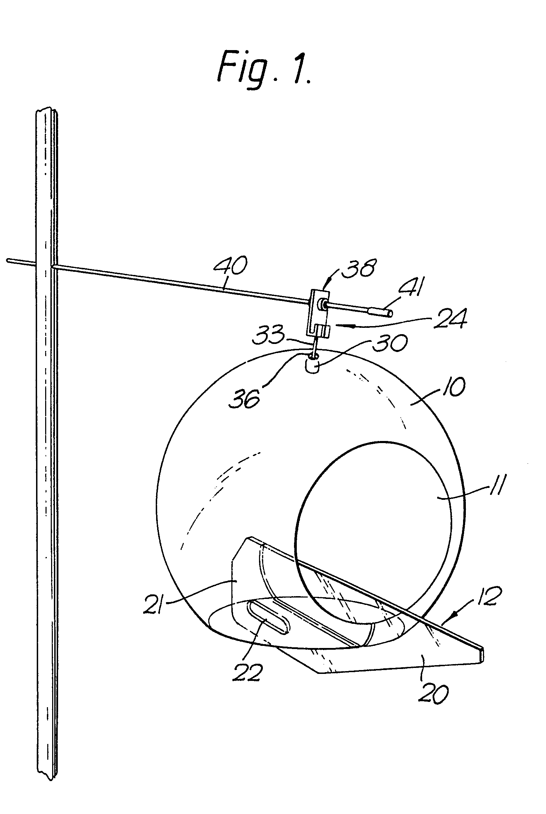

The pivot bracket 38 also includes a bore 39 for slidably receiving a support rod 40 (Fig. 1). The rod 40 includes a cap 41 to prevent the bracket 38 sliding off the end.

In use, the apex of the globe 10 rests on the dome-shaped bearing 30 and is free to rotate about the axis of the swivel pin. The rod 40 is either secured in any convenient manner at the top of an upright support member, or to a wall bracket. Alternatively a cable tie could be inserted through the bore 39 of the pivot bracket 38 so that the globe could be suspended from the branch of a tree.

When tested in an exposed location, food in the feeder was found to be dry even after the heaviest rainfall. It was also found that snow stayed only on the very top of the globe and even this quickly slid off after a few hours of daylight. In extremely cold conditions, water in one of the compartments froze overnight but began melting after a few hours of daylight because of a small rise in interior temperature caused by the "greenhouse effect" of the globe.

The globe is unaffected by strong sunlight and requires no outside cleaning since normal rainfall washes off any droppings or dirt. An occasional wipe with a clean damp cloth keeps the interior clean and free from infection.

## C L A I M S

1.      A wild bird feeder comprising a hollow container having an entrance opening for the passage of birds into and out of the container, means for suspending the container in such a manner that it is freely rotatable about a substantially vertical axis, and means responsive to the force of the prevailing wind for turning the container about its axis such that the entrance faces downwind.

2.      A feeder according to Claim 1 in which the container comprises a globe and in which the diameter or maximum width of the entrance opening is at least one third the diameter of the globe.

3.      A feeder according to Claim 2 in which the diameter of the entrance opening is at least half the diameter of the globe.

4.      A feeder according to Claim 2 in which the lower portion of the globe is oblate and includes at least one partition providing two or more separate compartments for retaining food and/or water.

5.      A feeder according to any one of the preceding claims in which the turning means comprises a vane positioned externally of the container.

6.      A feeder according to Claim 5 in which a portion of the vane extends outwardly from the container beneath the said entrance, the said portion thereby providing a perch for birds entering or leaving the container.

7.    A feeder according to Claim 5 in which the vane includes a tapered front portion projecting from the side of the container containing the said entrance, and in which a rear portion of the vane includes at least one aperture to reduce its surface area relative to the front portion.

8.    A feeder according to Claim 2 or Claim 3 in which the suspending means comprises a swivel mechanism including a bearing located at the apex of the globe, a swivel pin having one end seated in the bearing and its opposite end passing through an aperture in the globe, and means for mounting the swivel pin whereby the globe is free to rotate on the bearing about the axis of the pin.

9.    A feeder according to Claim 8 wherein the mounting means comprises a bracket having a recess for locating the head of the swivel pin and an opening for slidably receiving a support member.

10.    A feeder substantially as herein described with reference to the accompanying drawings.

# Fig. 1.

2/3

**Fig.2.**

36

11

A →

10

20

12

21

22

**Fig.3.**

36

11

10

12

0099657

Fig.4a.

Fig.4b.

Fig.4c.

Fig.4d.

Fig.4e.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y,A | DE-U-7 806 475 (EUFLOR)<br>* Claims 2-4; page 4, line 21 - page 6, line 32; figure 1 * | 1,5,7,<br>10 | A 01 K 31/00 |
| | --- | | |
| Y,A | US-A-3 788 279 (R.R. BOEHLAND)<br>* Column 2, lines 26-63; figure 1 * | 1,2,8,<br>10 | |
| | --- | | |
| Y,A | DE-U-8 205 344 (W. MÜLLER)<br>* Page 2; figure 1 * | 1,5,10 | |
| | ----- | | |

| | TECHNICAL FIELDS SEARCHED (Int. Cl. ³) |
|---|---|
| | A 01 K 31/00<br>A 01 K 39/00 |

The present search report has been drawn up for all claims

| Place of search<br>BERLIN | Date of completion of the search<br>26-09-1983 | Examiner<br>BERGZOLL M C |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82